**Europäisches Patentamt**

**European Patent Office**

**Office européen des brevets**

(11) Veröffentlichungsnummer: **0 290 933 B1**

(12) **EUROPÄISCHE PATENTSCHRIFT**

(45) Veröffentlichungstag der Patentschrift: **02.10.91**

(51) Int. Cl.⁵: **H04L 12/42**

(21) Anmeldenummer: **88107109.6**

(22) Anmeldetag: **03.05.88**

(54) **Verfahren zum Einleiten des Konfigurierens nach dem Unterbrechen mindestens zweier parallel angeordneter, ringförmiger Netze.**

(30) Priorität: **14.05.87 DE 3716178**

(43) Veröffentlichungstag der Anmeldung:
**17.11.88 Patentblatt 88/46**

(45) Bekanntmachung des Hinweises auf die
Patenterteilung:
**02.10.91 Patentblatt 91/40**

(84) Benannte Vertragsstaaten:
**AT CH DE FR GB IT LI**

(56) Entgegenhaltungen:
DE-A- 3 343 692
US-A- 4 596 982

COMPCON '82, DIGEST OF PAPERS, High
Technology in the Information Industry,
22.-25. Februar 1982, San Francisco, CA, Seiten 192-195, IEEE, New York, US; K. MORI et
al.: "Autonomous decentralized loop network"

IBM TECHNICAL DISCLOSURE BULLETIN,
Band 26, Nr. 2, Juli 1983, Seiten 803-804, New
York, US; D. ANDREWS et al.: "Recovery from
transmission medium failures in a ring"

(73) Patentinhaber: **Siemens Aktiengesellschaft**
**Wittelsbacherplatz 2**
**W-8000 München 2(DE)**

(72) Erfinder: **Heiss, Ludwig**
**Helene-Mayer-Ring 10**
**W-8000 München 40(DE)**
Erfinder: **Jung, Klaus, Dipl.-Ing.**
**Kaltenbrunnerstrasse 25**
**W-8000 München 71(DE)**
Erfinder: **Müller, Rudi, Dr. Phys.**
**Von-Branca-Strasse 35**
**W-8038 Gröbenzell(DE)**
Erfinder: **Reichbauer, Hermann, Dipl.-Ing.**
**Ettalstrasse 42 a**
**W-8000 München 70(DE)**

## Beschreibung

Die Erfindung betrifft ein Verfahren zum Einleiten des Konfigurierens eines aus 'n' parallel angeordneten, ringförmigen und wechselnde Übermittlungsrichtungen aufweisenden Netzen gebildeten Kommunikationsnetzes mit mindestens drei jeweils mit den 'n' ringförmigen Netzen verbundene Teilnehmereinrichtungen, die mit 'n' dem jeweiligen Netzzugriff dienenden Zugriffseinrichtungen ausgestattet sind, wobei mittels in diesen vorgesehener Schalt- und Steuereinrichtungen sowie weiterer Steuereinrichtungen der jeweiligen Teilnehmereinrichtung bei Unterbrechungen mindestens zweier, entgegengesetzte Übermittlungsrichtung aufweisender ringförmiger Netze durch Verbinden der jeweils übermittlungsrichtungsgemäß ankommenden Ringleitung eines ringförmigen Netzes bzw. Teilringnetzes mit der übermittlungsrichtungsgemäß abgehenden Ringleitung des jeweils anderen ringförmigen Netzes bzw. Teilringnetzes in den betroffenen Teilnehmereinrichtungen aus den intakten Ringnetzteilen mindestens ein einziges ringförmiges Netz konfiguriert wird.

Aus der DE-OS 33 43 692 A1 ist eine Fernmeldeanlage bekannt, bei der 'n' Ringleitungen angeordnet und mindestens drei Teilnehmerstationen bzw. Teilnehmereinrichtungen in die Ringleitungen eingefügt sind. Jede Teilnehmereinrichtung ist mit 'n' Zugriffseinrichtungen ausgestattet, die jeweils aus einer mit der Ringleitung verbundenen Ringkoppeleinrichtung und einer Ringsteuereinrichtung gebildet werden. In den Zugriffseinrichtungen wird der Zugriff der Teilnehmereinrichtung auf die jeweilige Ringleitung gesteuert und überwacht. Übergeordnete Zentralsteuereinrichtungen in den Teilnehmereinrichtungen koordinieren in Zusammenarbeit mit den Steuereinrichtungen der Zugriffseinrichtungen die Zugriffseinrichtungen untereinander und sind für die Bearbeitung teilnehmereinrichtungs-interner Prozeduren - z. B. Datenaufbereitung - zuständig. Bei Störungen der Ringleitungen - z. B. Leitungsunterbrechung, Ausfall der Ringkoppeleinrichtung, usw. - können mittels der übergeordneten und der in den Zugriffseinrichtungen vorhandenen Steuereinrichtungen und mit Hilfe von Verbindungen, die zwischen den Zugriffseinrichtungen angeordnet sind, sogenannte "loop back"-Verbindungen (Ringleitungsschleifen), gesteuert werden. Hierbei wird jeweils die übermittlungsrichtungsgemäß ankommende Ringleitung eines ringförmigen Netzes mit der übermittlungsrichtungsgemäß abgehenden Ringleitung eines anderen ringförmigen Netzes verbunden. Mit Hilfe dieser "loop back"-Verbindungen können bei Unterbrechung zweier ringförmiger Netze aus den noch intakten Ringnetzteilen ein oder mehrere kleinere ringförmige Netze konfiguriert werden. So gebildete ringförmige Netze schließen unter Umständen nicht mehr alle Teilnehmerrichtungen in einen Kommunikationsaustausch mit ein, jedoch wird zumindest jeweils einem Teil der Teilnehmereinrichtungen eine Kommunikation untereinander ermöglicht. Von Störungsfall zu Störungsfall müssen nun die Teilnehmereinrichtungen mittels - hinsichtlich Software- und Zeitaufwand - aufwendiger Fehleranalyse-Prozeduren entscheiden und untereinander abstimmen, welche der Teilnehmereinrichtungen die "loop back"-Verbindungen zu steuern hat.

Der Erfindung liegt die Aufgabe zugrunde, ein möglichst einfaches, Zeit- und Softwareaufwand sparendes Verfahren anzugeben, mittels dem nach allen in der Praxis auftretenden Störungen auf mindestens zwei ringförmigen Netzen ein Konfigurationsvorgang "loop back"-Verbinden in der Art einleitet, daß aus den noch intakten Ringnetzteilen ein oder mehrere intakte ringförmige Netze gebildet werden.

Die Aufgabe wird ausgehend von dem eingangs beschriebenen Verfahren durch die kennzeichnenden Merkmale des Anspruches 1 gelöst.

Besonders vorteilhaft wirkt sich auf das erfindungsgemäße Verfahren sowohl das Einbeziehen einer in jeder Teilnehmereinrichtung ermittelten Adressentabelleninformation, mittels der die Position einer einer Unterbrechungsstelle in entgegengesetzter Übermittlungsrichtung nächstgelegenen Teilnehmereinrichtung bestimmt wird als auch das Auswerten von Unterbrechungsinformationen aus, die bei Störungen eines ringförmigen Netzes von den Teilnehmereinrichtungen in das betroffene ringförmigen Netze ausgesendet werden. Die Adressentabelle wird in jeder Teilnehmereinrichtung für jedes ringförmige Netz mittels eines Adressenmeldeverfahrens gebildet, wodurch die Positionen der jeweiligen Teilnehmereinrichtungen in einem ringförmigen Netz festgelegt sind. Das Aktualisieren der Adressentabelle für jedes ringförmige Netz wird nach jedem Konfigurieren in dem jeweiligen ringförmigen Netz durchgeführt. Das Senden von Unterbrechungsinformationen nach einer Störung in einem ringförmigen Netz kann beispielsweise nach dem "Token Ring" - Zugriffsprotokoll gemäß ANSI/IEEE-Standard 802.5 erfolgen. Nach diesem Zugriffsprotokoll wird die Unterbrechungsinformation - in IEEE 802.5 sind dies die 'Beacon MAC Frames' - von der in Übermittlungsrichtung der Unterbrechungsstelle folgenden Teilnehmereinrichtung gesendet. Basierend auf dem Vorliegen der Information über die Position der Teilnehmereinrichtung im ringförmigen Netz und mit dem Senden von Unterbrechungsinformationen bei Ringunterbrechungen kann nach mindestens jeweils einer Unterbrechung in mindestens zwei ringförmigen Netzen das Konfigurieren mit Hilfe der "loop back"-Verbindungen nach dem Feststellen des Empfangs und Sendens von Unterbrechungsinformationen in einer

EP 0 290 933 B1

Teilnehmereinrichtung oder des Feststellens des Sendens von Unterbrechungsinformationen in Abhängigkeit der Lage der betreffenden Teilnehmereinrichtungen in der Art eingeleitet werden, daß aus den noch intakten Ringnetzteilen ein oder mehrere ringförmige Netze gebildet werden. Da das Erstellen von Adressentabellen und das Senden von Unterbrechungsinformationen auch für andere teilnehmereinrichtungsinterne Verfahren bzw. Prozeduren erforderlich ist, ergibt sich ein wesentlich geringerer sowohl zeitlicher als auch Software-Aufwand für einen zusätzlichen, das Konfigurieren einleitenden Verfahrensschritt. Dies führt in den Teilnehmereinrichtungen zu einer wesentlichen Reduzierung des Programmaufwandes und der dynamischen Belastung. Das Konfigurieren wird jeweils in den auf einem ringförmigen Netz Unterbrechungsinformation sendenden Teilnehmereinrichtungen, die auf dem jeweils anderen ringförmigen Netz Unterbrechungsinformation empfangen und in jeweils den aktuellen Unterbrechungsstellen der ringförmigen Netze in der Übermittlungsrichtung entgegengesetzten Richtung nächstgelegenen Teilnehmereinrichtung, die jeweils auf dem anderen ringförmigen Netz Unterbrechungsinformationen empfangen, eingeleitet. Hierbei kann das Feststellen des Sendens bzw. des Empfangens von Unterbrechungsinformation und das Feststellen der Teilnehmereinrichtung, die der Unterbrechungsstelle am nächsten liegt, zu unterschiedlichen Zeitpunkten erfolgen, die entsprechenden Informationen, die das Konfigurieren einleiten, müssen jedoch innerhalb eines von den Netzreaktionszeiten abhängigen und bestimmten Zeitraumes vorliegen.

Gemäß einer vorteilhaften Weiterbildung der Erfindung ist nach einer mehrere erfolglose Konfigurationsversuche mehrerer Teilnehmereinrichtungen beinhaltenden und auf die Netzgröße abgestimmten Überwachungszeit in allen Teilnehmereinrichtungen das Konfigurieren der ringförmigen Netze einleitbar. Mit dieser Maßnahme wird sichergestellt, daß ein Totalausfall eines oder mehrerer ringförmiger Netze frühzeitig erkannt und die entsprechenden Sicherungs- bzw. Wiederherstellungsmaßnahmen eingeleitet werden können.

Im folgenden wird die Erfindung anhand von fünf zeichnerischen Darstellungen näher erläutert. Dabei zeigen

| | |
|---|---|
| Fig. 1 | zwei parallel angeordnete ringförmige Netze mit eingefügten Teilnehmereinrichtungen, |
| Fig. 2 | zwei parallel angeordnete ringförmige Netze mit jeweils einer Unterbrechung in jedem Netz zwischen zwei Teilnehmereinrichtungen, |
| Fig. 3 | zwei parallel angeordnete ringförmige Netze mit jeweils einer Unterbrechung in jedem Netz jeweils vor einer Teilnehmereinrichtung, |
| Fig. 4a und Fig. 4b | jeweils zwei parallel angeordnete ringförmige Netze mit jeweils einer Unterbrechung in jedem ringförmigen Netz zwischen zwei Teilnehmereinrichtungen und einer zusätzlichen Unterbrechung in einem ringförmigen Netz zwischen zwei weiteren Teilnehmereinrichtungen und |
| Fig. 5 | die Anordnung der Systemkomponenten in einer Teilnehmereinrichtung, die das Einleiten des Konfigurierens und das Konfigurieren bewirken. |

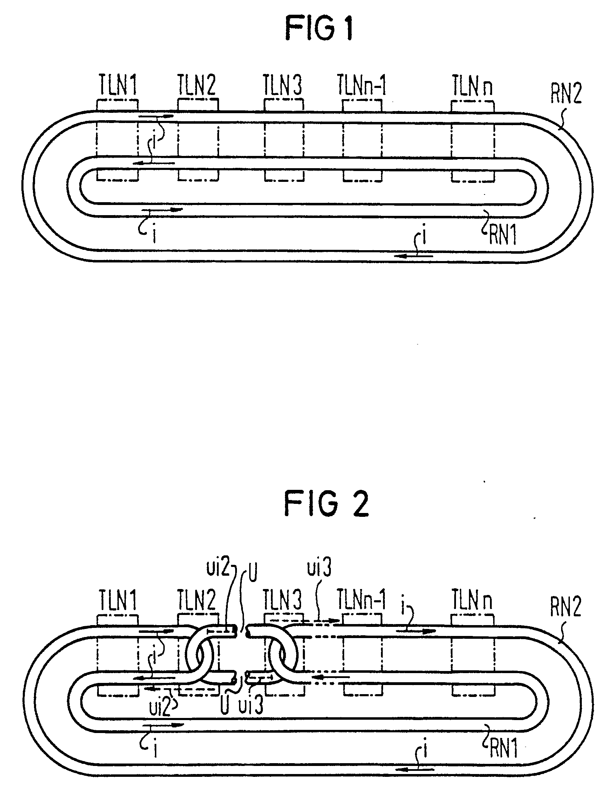

Fig. 1 zeigt mehrere Teilnehmereinrichtungen TLN1...TLNn, die jeweils mittels zweier, parallel angeordneter Ringleitungen untereinander verbunden sind. Die zwei parallel angeordneten Ringleitungen bilden zwei ringförmige Netze RN1, RN2, an die jede der Teilnehmereinrichtungen TLN angeschlossen ist. Diese Doppelringkonfiguration stellt die Ausgangskonfiguration für die in Fig. 2 bis Fig. 5 beschriebenen Ausführungsbeispiele dar. Die Übermittlungsrichtung der auf den ringförmigen Netzen zu übertragenden Ringinformationen i ist durch Pfeile gekennzeichnet.

In Fig. 2 seien beispielhaft beide Ringleitungen zwischen Teilnehmereinrichtung TLN2 und Teilnehmereinrichtung TLN3 aufgrund beispielsweise eines Kabelbruches, unterbrochen. Die in Übermittlungsrichtung folgenden Teilnehmereinrichtungen TLN2, TLN3 stellen das Ausbleiben von Ringinformationen i und somit die Unterbrechungen der ringförmigen Netze RN1, RN2 fest und leiten das Aussenden von Unterbrechungsinformationen ui ein. Somit werden in der Teilnehmereinrichtung TLN2 die Unterbrechungsinformationen ui2 in das erste ringförmige Netz RN1 und in der Teilnehmereinrichtung TLN3 die Unterbrechungsinformationen ui3 in das zweite ringförmige Netz RN2 gesendet. Die von der Teilnehmereinrichtung TLN2 gesendeten Unterbrechungsinformationen ui2 werden im ersten ringförmigen Netz RN1 mittels der implementierten Ringprozeduren von Teilnehmereinrichtung TLN zu Teilnehmereinrichtung TLN übermittelt und gelangen schließlich zur Teilnehmereinrichtung TLN3. Analog hierzu werden die in der Teilnehmereinrichtung TLN3 ausgesandten Unterbrechungsinformationen ui3 über das zweite ringförmige Netz RN2 übertragen und in der Teilnehmereinrichtung TLN2 empfangen. Sowohl Teilnehmereinrichtung TLN2 als auch Teilnehmereinrichtung TLN3 stellen fest, daß sie jeweils auf einem ringförmigen Netz RN1, RN2 Unterbrechungsinformationen ui senden und jeweils auf dem anderen ringförmigen Netz RN eine Unterbrechungsinformationen ui empfangen. Daraufhin wird das Konfigurieren, d. h. das Bilden der "loop back"-Verbindungen, sowohl in Teilnehmereinrichtung TLN2 als auch in Teilnehmereinrichtung TLN3 eingeleitet. Hierbei

3

wird in den betroffenen Teilnehmereinrichtungen TLN jeweils die übermittlungsrichtungsgemäß ankommende Ringleitung eines ringförmigen Netzes RN1, RN2 mit der übermittlungsrichtungsgemäß abgehenden Ringleitung des jeweils anderen ringförmigen Netzes RN1, RN2 verbunden. Mittels dieses "loop back"-Verbindens wird aus den noch intakten Ringnetzteilen beider ringförmiger Netze RN1, RN2 ein einziges, alle Teilnehmereinrichtungen TLN einschließendes ringförmiges Netz - siehe Fig. 1 - gebildet. Nach dem Ablaufen entsprechender Wiederherstellungsprozeduren - einschließlich der Adressenmeldeprozedur - können die Teilnehmereinrichtungen TLN wieder untereinander kommunizieren. Dies bedeutet zwar eine Halbierung der Übermittlungskapazität zwischen den Teilnehmereinrichtungen TLN, jedoch kann der jede Kommunikation verhindernde Totalausfall des Netzes vermieden werden. Aufgrund des "loop back"-Verbindens werden die von den Teilnehmereinrichtungen TLN2 bzw. der Teilnehmereinrichtung TLN3 ausgesandten Unterbrechungsinformationen ui jeweils in den Teilnehmereinrichtungen TLN2, TLN3 reflektiert und jeweils in Richtung der Unterbrechungsstelle U ausgesandt. Empfangen aufgrund der Wiederherstellung der Ringleitungen eine oder beide der beiden Teilnehmereinrichtungen TLN2, TLN3 die entsprechende Unterbrechungsinformationen ui, so werden die "loop back"-Verbindungen rekonfiguriert und eines der beiden oder beide ringförmige Netze RN1, RN2 wieder in Betrieb genommen.

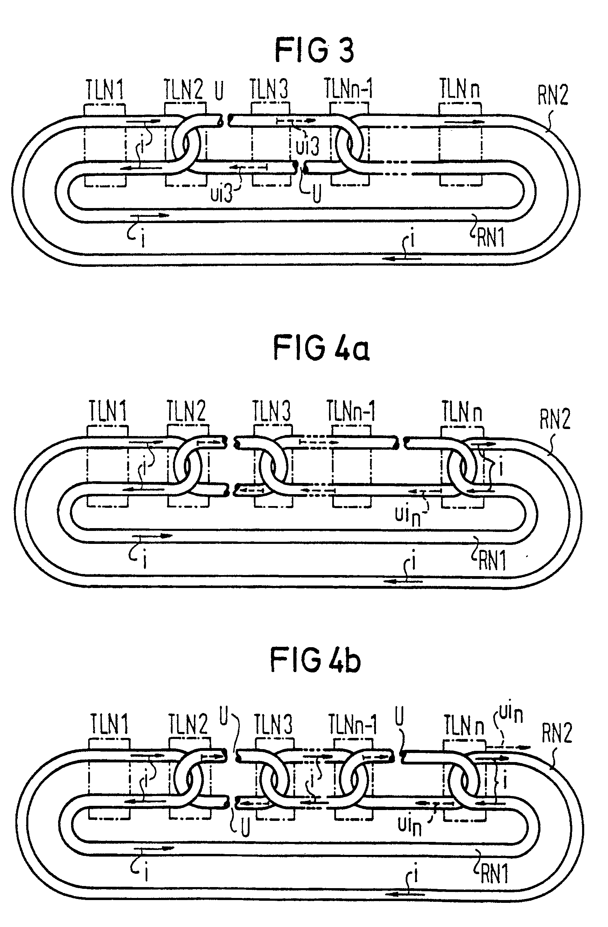

In Fig. 3 ist beispielhaft das erste ringförmige Netz RN1 zwischen der Teilnehmereinrichtung TLN3 und der Teilnehmereinrichtung TLN4 und das zweite ringförmige Netz RN2 zwischen der Teilnehmereinrichtung TLN2 und der Teilnehmereinrichtung TLN3 unterbrochen. Die Unterbrechungen U können beispielsweise durch Kabelbrüche in den Ringleitungen oder durch Totalausfall beider Empfangseinrichtungen in der Teilnehmereinrichtung TLN3 verursacht werden. Dies bedeutet, daß Teilnehmereinrichtung TLN3 keine Ringleitungsinformationen i empfangen kann, wohl aber selbst noch an beide ringförmige Netze RN1, RN2 Ringleitungsinformationen zu senden vermag. Die Teilnehmereinrichtung TLN3 stellt aufgrund des Fehlens des Empfangs von Ringleitungsinformationen i fest, daß beide ringförmige Netze RN1, RN2 unterbrochen sind, worauf in der Teilnehmereinrichtung TLN3 Unterbrechungsinformationen ui3 erzeugt und übermittlungsrichtungsgemäß sowohl an das ringförmige Netz RN1 als auch an das ringförmige Netz RN2 gesendet werden. Die Unterbrechungsinformationen ui3 werden mittels Ringübermittlungsprozeduren durch das jeweilige ringförmige Netz RN1, RN2 übermittelt und gelangen sowohl an Teilnehmereinrichtung TLN2 als auch an Teilnehmereinrichtung TLN4. Da nun sowohl Teilnehmereinrichtung TLN2 als auch Teilnehmereinrichtung TLN4 der aktuellen Unterbrechungsstelle U des jeweiligen ringförmigen Netzes RN1, RN2 in entgegengesetzter Übermittlungsrichtung am nächsten liegen und Unterbrechungsinformationen ui3 empfangen, wird in beiden Teilnehmereinrichtungen TLN2, TLN4 das Konfigurieren bzw. das "loop back"-Verbinden eingeleitet. Nach dem Konfigurieren sind alle Teilnehmereinrichtungen TLN, außer Teilnehmereinrichtung TLN3, in ein aus den noch intakten Ringnetzteilen des ersten und zweiten ringförmigen Netzes RN1, RN2 gebildetes einziges ringförmiges Netz mit einbezogen. Nach dem Ablaufen von Wiederherstellungsprozeduren - einschließlich des Adressenmeldeverfahrens - können die in das neu gebildete ringförmige Netz mit einbezogenen Teilnehmereinrichtungen TLN wieder untereinander kommunizieren. Die Teilnehmereinrichtung TLN3 sendet weiterhin Unterbrechungsinformationen ui3 aus, die jedoch nun in den Teilnehmereinrichtungen TLN2, TLN4 aufgrund der "loop back"-Verbindung reflektiert und jeweils in Richtung der Unterbrechungsstelle U weitergeleitet werden. Wird eine oder beide Unterbrechung(en) U bzw. die Störung(en) in den Empfangseinrichtung(en) der Teilnehmereinrichtung TLN3 behoben, so empfängt die Teilnehmereinrichtung TLN3 die Unterbrechungsinformationen ui3 und leitet ein erneutes Konfigurieren im Sinne des Bildens eines oder beider der ursprünglichen ringförmigen Netze RN1, RN2 ein.

In Fig. 4a - siehe auch Fig. 2 - sind die Ringleitungen des ersten und zweiten ringförmigen Netzes RN1, RN2 zwischen der Teilnehmereinrichtung TLN2 und der Teilnehmereinrichtung TLN3 unterbrochen. Das Einleiten des Konfigurierens und das Konfigurieren der Ringnetzteile sowohl des ersten als auch des zweiten ringförmigen Netzes RN1, RN2 zu einem neuen einzigen ringförmigen Netz erfolgt gemäß den in Fig. 2 erläuterten Verfahrensschritten. Nun sei beispielhaft angenommen, daß zwischen der Teilnehmereinrichtung TLNn-1 und der Teilnehmereinrichtung TLNn in dem neu konfigurierten ringförmigen Netz aufgrund eines weiteren Ringleitungsbruches eine zusätzliche Unterbrechung U auftritt. Die Teilnehmereinrichtung TLNn liegt der Unterbrechungsstelle U übermittlungsrichtungsgemäß am nächsten und sendet, nachdem die Unterbrechung U aufgrund des Fehlens von empfangenen Ringinformationen i in der Teilnehmereinrichtung TLNn erkannt wurde, Unterbrechungsinformationen uin übermittlungsrichtungsgemäß in das neu gebildete ringförmige Netz. Diese Unterbrechungsinformation uin gelangt mittels geeigneter Ringübermittlungsprozeduren zur Teilnehmereinrichtung TLN2, wird dort reflektiert und schließlich wieder in der Teilnehmereinrichtung TLNn empfangen. In der Teilnehmereinrichtung TLNn wird nun festgestellt, daß sowohl Unterbrechungsinformation uin gesendet als auch empfangen werden, worauf in der Teilnehmereinrichtung TLNn das Konfigurieren bzw. das "loop back"-Verbinden eingeleitet wird. Nach diesem Konfigurationsvorgang bilden Teilnehmereinrichtung TLN1, TLN2 und TLNn ein kleines ringförmiges Netz, in dem

4

EP 0 290 933 B1

nach dem Ablaufen von Wiederherstellungsverfahrens zwischen den genannten Teilnehmereinrichtungen TLN eine Kommunikation möglich ist. Aufgrund des "loop back"-Verbindens in der Teilnehmereinrichtung TLNn wird die Unterbrechungsinformation uin nun in Richtung Teilnehmereinrichtung TLNn-1 geleitet. Da die Teilnehmereinrichtung TLNn-1 sowohl der Unterbrechungsstelle U in entgegengesetzter Übermittlungsrichtung betrachtet am nächsten liegt als auch auf der nicht unterbrochenen Ringleitung Unterbrechungsinformationen uin empfängt, leitet diese Teilnehmereinrichtung TLNn-1 ebenfalls das Konfigurieren bzw. "loop back"-Verbinden ein. Mittels dieses Konfigurationsvorganges wird ein zweites kleines ringförmiges Netz gebildet, das die Teilnehmereinrichtung TLN3 und die Teilnehmereinrichtung TLNn-1 und alle dazwischen angeordneten und nicht dargestellten Teilnehmereinrichtungen TLNn umfaßt. Nach dem Ablaufen geeigneter Wiederherstellungsprozeduren können auch in diesem zweiten kleinen ringförmigen Netz die eingefügten Teilnehmereinrichtungen TLN untereinander kommunizieren. Fig. 4b zeigt nun diejenige endgültige Netzkonfiguration, die nach der Anwendung des erfindungsgemäßen Verfahrens zum Einleiten des Konfigurierens in den betroffenen Teilnehmereinrichtungen TLN erreicht wird. Ein weiterer Vorteil des erfindungsgemäßen Verfahrens - dies ist aus Fig. 4a und 4b ersichtlich - besteht nun darin, daß alle noch intakten Ringnetzteile der ursprünglichen ringförmigen Netze RN1, RN2 zum Bilden von kleineren ringförmigen Netzen herangezogen werden.

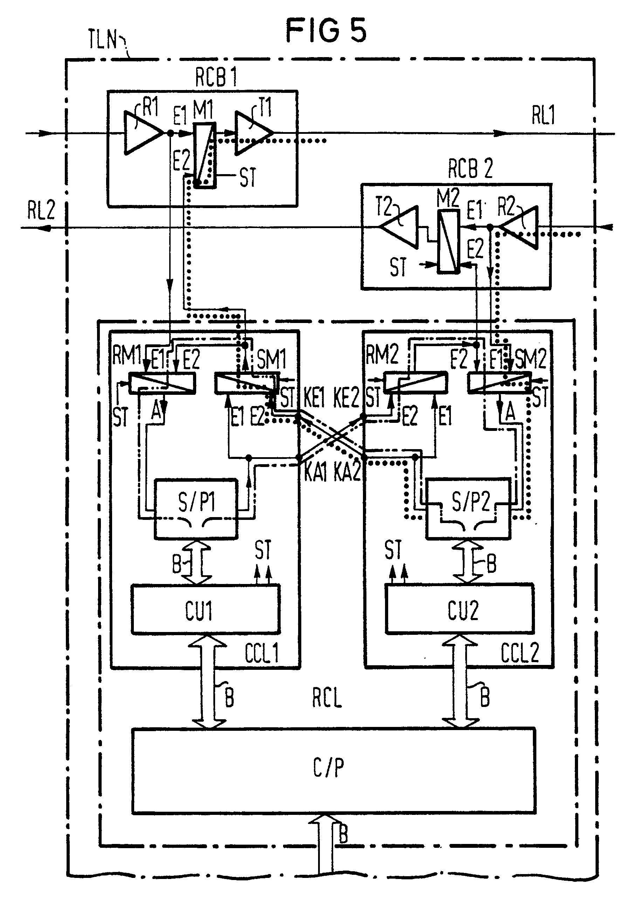

In Fig. 5 sind diejenigen Systemkomponenten einer Teilnehmereinrichtung TLN dargestellt, mit dessen Hilfe das Konfigurieren bzw. "loop back"-Verbinden eingeleitet und durchgeführt wird. Sowohl in eine Ringleitung RL1 eines ersten ringförmigen Netzes als auch in eine Ringleitung RL2 - beide Ringleitungen RL1, RL2 können beispielhaft mittels optischer Lichtwellenleiter realisiert sein - eines zweiten ringförmigen Netzes ist jeweils eine gleich aufgebaute Ringkoppeleinrichtung RCB1, RCB2 eingefügt. Hierbei ist jeweils die übermittlungsrichtungsgemäß ankommende Ringleitung RL1, RL2 mit einer optischen Empfängereinrichtung R1, R2 verbunden. Der Ausgang dieser Empfängereinrichtung R1, R2 wird jeweils zum Eingang einer Multiplexeinrichtung M1, M2 geführt. An jeweils einer mit jeweils dem Ausgang der Multiplexeinrichtung M1, M2 verbundenen optischen Sendeeinrichtung T1, T2 ist jeweils die übermittlungsrichtungsgemäß abgehende Ringleitung RL1, RL2 angeschlossen. Jeder der beiden Ringkoppeleinrichtungen RCB1, RCB2 ist eine gleich aufgebaute Zugriffseinrichtung CCL1, CCL2 zugeordnet. Jede Zugriffseinrichtung CCL1, CCL2 enthält eine Empfangsmultiplexeinrichtung RM1, RM2, eine Sendemultiplexeinrichtung SM1, SM2, eine Serien-Parallel-Umsetzeinrichtung S/P1, S/P2 und eine Steuereinrichtung CU1, CU2. Wegen des gleichen Aufbaus wird im folgenden der Aufbau einer einzigen Zugriffseinrichtung CCL1, CCL2 beschrieben. Ein erster Eingang E1 des Empfangsmultiplexers RM1, RM2 ist über eine entsprechende Verbindung mit dem Ausgang der optischen Empfangseinrichtung R1, R2 verbunden. Der Ausgang A der Empfangsmultiplexeinrichtung RM1, RM2 wird auf einen Eingang der Serien-Parallel-Umsetzeinrichtung S/P1, S/P2 geführt. Ein zweiter Eingang E2 der Empfangsmultiplexeinrichtung RM1, RM2 ist über entsprechende Verbindungen mit einem zweiten Eingang der Multiplexer M1, M2 der Ringkoppeleinrichtungen RCB1, RCB2 verbunden. Der Ausgang der Serien-Parallel-Umsetzeinrichtungen S/P1, S/P2 wird einerseits zu einem ersten Eingang E1 der Sendemultiplexer SM1, SM2 und andererseits zu einem Konfigurationsausgang KA1, KA2 der Zugriffseinrichtungen CCL1, CCL2 geführt. Der zweite Eingang E2 der Sendemultiplexer SM1, SM2 ist mit einem Konfigurationseingang KE1, KE2 der Zugriffseinrichtung CCL1, CCL2 verbunden. Der Ausgang der Sendemultiplexer SM1, SM2 gelangt ebenfalls auf den zweiten Eingang E2 des Multiplexers M1, M2 in der Ringkoppeleinrichtung RCB1, RCB2. Die Serien-Parallel-Umsetzeinrichtung S/P1, S/P2 ist über aus Daten-, Steuer-und Adreßleitungen bestehenden Bussystemen B mit den Steuereinrichtungen CU1, CU2 der Zugriffseinrichtung CCL1, CCL2 und über ein weiteres gleichartig aufgebautes Bussystem B mit einer übergeordneten Kanalschnittstellensteuereinrichtung CIP verbunden. Die beiden Zugriffseinrichtungen CCL1, CCL2 und die übergeordnete Kanalschnittstellensteuereinrichtung CIP bilden zusammen die Ringsteuereinrichtung RCL. Diese Ringsteuereinrichtung RCL kommuniziert über ein weiteres, gleichartig aufgebautes Bussystem B mit den weiteren, nicht dargestellten Einrichtungen der Teilnehmereinrichtung TLN. Jeder der Multiplexer M, RM, SM ist mit einem Steuereingang ST ausgestattet, der jeweils mit einem Steuerausgang ST der ihm zugeordneten Steuereinrichtung CU1, CU2 verbunden ist. Der Konfigurationsausgang KA1, KA2 ist jeweils auf den Konfigurationseingang KE2, KE1 der jeweils gegenüberliegenden Zugriffseinrichtung CCL1, CCL2 geführt. Mit Hilfe der Steuerungen CU1, CU2, CIP und entsprechenden Signalen auf den Steuereingängen ST der Multiplexer M, RM, SM können je nach Betriebszustand der Ringleitungen RL1, RL2 und der Teilnehmereinrichtungen TLN die Multiplexer M, RM, SM entsprechend gesteuert werden. Die für das erfindungsgemäße Verfahren relevante "loop back"-Verbindung ist durch eine Punktierung hervorgehoben. Beispielhaft ist hierbei die "loop back"-Verbindung der übermittlungsrichtungsgemäß ankommenden Ringleitung RL2 des zweiten ringförmigen Netzes RN2 mit der übermittlungsrichtungsgemäß in der Ringkoppeleinrichtung RCB1 abgehenden Ringleitung RL1 des ersten ringförmigen Netzes RN1 dargestellt, wobei nach einem "loop back"-Verbinden zusätzlich die übermitt-

5

lungsrichtungsgemäß ankommende Ringleitung RL1 des ersten ringförmigen Netzes RN1 mit der übermittlungsrichtungsgemäß abgehenden Ringleitung RL2 des zweiten ringförmigen Netzes RN2 über die Zugriffseinrichtungen verbunden ist.

Um beide Zugriffseinrichtungen CCL1, CCL2 auch ohne Ringkoppeleinrichtungen RCB1, RCB2 und Ringleitungen RL1, RL2 im Störungsfall testen zu können, kann über die Verbindungen zwischen den Konfigurationsein- bzw. -ausgängen KA1, KA2, KE1, KE2 und entsprechend gesteuerter Multiplexer RM, SM eine Testschleife gebildet werden. Diese Testschleife - in Fig. 5 mittels Doppelpunkt-Strichlinie dargestellt - schließt alle internen Verbindungen und Steuerungen in den Zugriffseinrichtungen in den "Interntest" mit ein.

Die nachfolgende Tabelle enthält beispielhaft Realisierungsmöglichkeiten für die einzelnen Systemkomponenten der Teilnehmereinrichtung TLN:

```
Multiplexer M, RM, SM                    TTL-Schaltkreis SN 74157
                                         Siemens LWL-Komponenten
optische Empfangseinrichtungen R1, R2    z. B. V 42253-H4-B4
optische Sendeeinrichtungen T1, T2           V 42253-G4-B5
Serien-Parallel-Umsetzeinrichtung S/P1,S/P2 TTL-Schaltkreis SN 74LS299
Steuereinrichtung CU1, CU2               maskenprogrammierbarer, kunden-
                                         spezifischer, integrierter
                                         Schaltkreis
Steuereinrichtung CIP                    Siemens-Mikroprozessor-System
                                         SAB 80186
```

**Patentansprüche**

1. Verfahren zum Einleiten des Konfigurierens eines aus 'n' parallelen, ringförmigen und wechselnde Übermittlungsrichtungen aufweisenden Netzen gebildeten Kommunikationsnetzes mit mindestens drei jeweils mit den 'n' ringförmigen Netzen verbundenen Teilnehmereinrichtungen, die mit 'n' dem jeweiligen Netzzugriff dienenden Zugriffseinrichtungen ausgestattet sind, wobei mittels in diesen vorgesehener Schalt- und Steuereinrichtungen sowie weiterer Steuereinrichtungen der jeweiligen Teilnehmereinrichtung bei Unterbrechungen mindestens zweier, entgegengesetzte Übermittlungsrichtung aufweisender ringförmiger Netze durch Verbinden der jeweils übermittlungsrichtungsgemäß ankommenden Ringleitung eines ringförmigen Netzes bzw. Teilringnetzes mit der übermittlungsrichtungsgemäß abgehenden Ringleitung des jeweils anderen ringförmigen Netzes bzw. Teilringnetzes in den betroffenen Teilnehmereinrichtungen aus den intakten Ringnetzteilen mindestens ein einziges ringförmiges Netz konfiguriert wird,
   **dadurch gekennzeichnet,**
   daß mittels eines nach jedem Konfigurieren initiierten Adressenmeldeverfahrens eine die aktuelle Konfiguration der ringförmigen Netze repräsentierende Adressentabelleninformation in jeder Teilnehmereinrichtung gespeichert wird,
   daß bei einer Unterbrechung eines oder mehrerer ringförmiger Netze in jeder der der Unterbrechungsstelle (U) in Übermittlungsrichtung folgenden Zugriffseinrichtung eine Unterbrechungsinformation (ui) erzeugt und in dem jeweils unterbrochenen ringförmigen Netz in Übermittlungsrichtung an alle in das Netz eingefügten Teilnehmereinrichtungen (TLN) gesendet wird,
   daß das Konfigurieren nach mindestens einer Unterbrechung in mindestens zwei, entgegengesetzte Übermittlungsrichtung aufweisenden ringförmigen Netzen (RN)
      - jeweils in den auf einem ringförmigen Netz (RN) Unterbrechungsinformation (ui) sendenden Teilnehmereinrichtungen (TLN), die auf dem jeweils anderen ringförmigen Netz (RN) Unterbrechungsinformation (ui) empfangen,
      - und in jeweils den aktuellen Unterbrechungsstellen (U) der ringförmigen Netze (RN) in der Übermittlungsrichtung entgegengesetzter Richtung nächstgelegenen Teilnehmereinrichtungen (TLN), die jeweils auf dem anderen ringförmigen Netz (RN) Unterbrechungsinformation (ui) empfangen,
   im Sinne des Bildens eines oder mehrerer ringförmiger Netze aus den intakten ringförmigen Ringnetzteilen eingeleitet wird.

2. Verfahren nach Anspruch 1,
   **dadurch gekennzeichnet,**
   daß nach einer mehrere erfolglose Konfigurationsversuche mehrerer Teilnehmereinrichtungen (TLN) beinhaltenden und auf die Netzgröße abgestimmten Überwachungszeit das Konfigurieren in allen Teilnehmereinrichtungen (TLN) einleitbar ist.

## Claims

1. Method for initialising the configuration of a communications network formed by networks having 'n' parallel, ring-shaped and alternating transmission directions, having at least three subscriber devices, in each case connected to the 'n' ring networks, which subscriber devices are equipped with 'n' access devices used for access to the respective network, such that, by means of the switching and control devices provided in these access devices and further control devices in the respective subscriber device, in the case of interruptions in at least two ring networks having opposite transmission directions at least one single ring network is configured by connecting the respective ring feeder, coming in according to the respective direction of transmission, of a ring network or partial ring network to the ring feeder leaving according to the direction of transmission of the respective other ring network or partial ring network in the affected subscriber devices from the intact parts of the ring network, characterised in that, by means of an address signalling process, initiated after each configuration, an address table information item, representing the current configuration of the ring networks, is stored in each subscriber device, in that, in the case of an interruption of one or more ring networks in each of the access devices following the interruption point (U) in the direction of transmission, an interruption information item (ui) is produced and is transmitted in the direction of transmission to all the subscriber devices (TLN) inserted into the network in the respective interrupted ring network, in that the configuration, after at least one interruption in at least two ring networks (RN) having opposing directions of transmission, the configuration is initialised in the sense of forming one or more ring networks from the intact ring-shaped parts of the ring network
   - in each case in the subscriber devices (TLN) transmitting interruption information (ui) on a ring network (RN), which receive interruption information (ui) on the respective ring network (RN),
   - and in each case in the subscriber devices (TLN) located next to the current interruption point (U) of the ring networks (RN) in the direction opposite to the direction of transmission, which subscriber devices in each case receive interruption information (ui) on the other ring network (RN).

2. Method according to Claim 1, characterised in that after a monitoring time governed by the size of the network and containing a plurality of unsuccessful configuration attempts on a plurality of subscriber devices (TLN), the configuration is initialised in all the subscriber devices (TLN).

## Revendications

1. Procédé pour déclencher l'opération de configuration d'un réseau de communication formé par "n" réseaux annulaires parallèles, qui possèdent des sens de transmission alternés, et comportant au moins trois postes d'abonnés raccordés respectivement aux "n" réseaux annulaires et qui sont équipés de "n" dispositifs d'accès utilisés pour réaliser l'accès à un réseau, et dans lequel au moins un seul réseau annulaire est configuré au moyen de dispositifs de commutation et de commande prévus dans ces dispositifs d'accès ainsi qu'au moyen d'autres dispositifs de commande du poste d'abonné concerné, dans le cas d'interruptions d'au moins deux réseaux annulaires possédant des sens de transmission opposés, par raccordement du conducteur annulaire, qui arrive respectivement dans le sens de transmission, d'un réseau annulaire ou d'un réseau annulaire partiel au conducteur annulaire, qui part dans le sens de transmission, de l'autre réseau annulaire ou de l'autre réseau annulaire partiel respectif dans les postes d'abonnés considérés, à partir des parties intactes des réseaux annulaires, caractérisé par le fait
   qu'au moyen d'un procédé de signalisation d'adresses déclenché après chaque opération de configuration, une information d'un tableau d'adresses, qui représente l'opération de configuration actuelle des réseaux annulaires, est mémorisée dans chaque poste d'abonné,
   que, dans le cas d'une interruption d'un ou de plusieurs réseaux annulaires dans chacun des dispositifs d'accès qui succèdent au point d'interruption (U) dans le sens de transmission, une information d'interruption (ui) est produite et est envoyée, dans le sens de transmission, dans le réseau annulaire respectivement interrompu, à tous les postes d'abonnés (TLN) insérés dans ce réseau,

que l'opération de configuration est déclenchée dans le sens de la formation d'un ou plusieurs réseaux annulaires à partir des parties annulaires intactes de réseaux annulaires, pour au moins une interruption dans au moins deux réseaux annulaires (RN) possédant des sens de transmission opposés,

- respectivement dans les postes d'abonnés (TLN), qui émettent une information d'interruption (ui) dans un réseau annulaire (RN) et reçoivent l'information d'interruption (ui) dans l'autre réseau annulaire respectif (RN), et
- dans des postes d'abonnés (TLN) qui sont situés directement des points respectifs actuels d'interruption (U) des réseaux annulaires (RN) en aval dans le sens opposé au sens de transmission et qui reçoivent des informations d'interruption (ui) respectivement dans l'autre réseau annulaire (RN).

2. Procédé suivant la revendication 1, caractérisé par le fait qu'après un temps de contrôle incluant plusieurs essais infructueux de configurations de plusieurs postes d'abonnés (TLN) et réglé sur la taille du réseau, l'opération de configuration peut être déclenchée dans tous les postes d'abonnés (TLN).

## FIG 1

## FIG 2

# FIG 3

# FIG 4a

# FIG 4b

# FIG 5